# DEMANDE DE BREVET EUROPEEN

(11) **EP 3 300 012 A1**
(43) Date de publication de la demande: **28.03.2018**
(21) Numéro de dépôt: 17192407.9
(22) Date de dépôt: 21.09.2017
(51) Int. Cl.: G06Q 20/40, G06Q 30/02

(54) **PROCEDE ET SYSTEME POUR GERER DES AUTORISATIONS D'ACHAT**

(30) Priorité: 21.09.2016 FR 1670540
(71) Demandeur: Aypomag, 91370 Verrieres le Buisson (FR)
(72) Inventeur: PERRACHON, Yves, 91370 Verrieres le Buisson (FR)
(74) Mandataire: Mazabraud, Xavier

(57) **Abrégé**

L'invention porte sur un procédé pour gérer des autorisations d'achat par un bénéficiaire, dans lequel on constitue une enveloppe de fonds affectés à des types de dépenses prédéterminées, l'affectation pouvant être contrôlée avant la finalisation de l'achat et l'achat pouvant être scellé, de sorte qu'il devient irrévocable. L'invention porte aussi sur un système permettant la mise en oeuvre de ce procédé.

## Description

La présente invention se rapporte au domaine des procédés et dispositifs pour gérer et sécuriser une transaction, notamment une transaction faisant intervenir un paiement auprès d'un fournisseur. Un tel procédé ou un tel dispositif peut avantageusement être utilisé pour des étudiants ou des personnes à faibles moyens.

On connait des cartes bancaires qui bloquent tout retrait ou tout paiement dès que le compte en banque associé est vide. Or, rien ne garantit que le titulaire de la carte ait effectué les dépenses qui lui sont essentielles ou que les fonds ont bien été affectés à des dépenses prévues ; ainsi, par exemple, rien ne permet de garantir à des parents que leur enfant étudiant a bien payé son loyer, ses études et sa nourriture, avant que sa carte ne soit bloquée.

A ce jour la population étudiante est confrontée en France à des coûts d'études supérieures, compris entre 10 000 € et 20 000 € par an et sur des cycles qui durent de 2 à 5 ans. La plupart des étudiants sont dans l'impossibilité d'y faire face sans recours à :
- du travail partiel pendant leur cycle d'études,
- des financements familiaux, quand ils sont possibles,
- des emprunts bancaires, quand ils sont possibles et qui nécessitent des plans de remboursement, alors qu'ils n'ont pas encore de salaire.
- des bourses d'études, quand leur cycle d'étude et leur situation les rend accessibles.

Les collectivités et les universités, disposant de moins en moins d'aides de l'état, n'apportent pas non plus le soutien nécessaire et suffisant aux plus défavorisés. En 2016 les fonds boursiers, pour les allocataires validés étaient épuisés dès avril. Les étudiants qui abandonnent pour raisons financières ou par épuisement entre un emploi précaire et leurs études, sont de plus en plus nombreux, près de 30 %, selon l'INSEE. Pour la rentrée 2016/2017, le cycle universitaire aurait besoin de 850 millions d'euros supplémentaires, si tant est qu'il puisse maîtriser l'affectation de ces fonds aux plus défavorisés.

Cette situation est aussi génératrice de risques majeurs, de santé, de dépressions et de tentatives de suicide, sans évoquer les situations d'endettement à long terme à des conditions quelques fois usuraires.

Le but de l'invention est de proposer un système et un procédé qui permet de gérer des dépenses et de garantir leur affectation en temps réel.

Pour atteindre son but, l'invention propose un procédé pour gérer des autorisations d'achat par un bénéficiaire, comprenant :
la fourniture :
   - de moyens de base de données ;
   - de moyens d'authentification du bénéficiaire ;
   - de moyens de paiement par le bénéficiaire, numériques et de préférence en une monnaie électronique ;
   - de moyens pour enregistrer une opération de façon unique et irrévocable, de préférence comprenant des moyens de scellement cryptographique (Blockchain) ;
des étapes préalables pour :
   - constituer au moins une enveloppe de fonds ; et, pour chaque enveloppe,
   - archiver dans les moyens de base de données des autorisations d'achat comprenant un ou plusieurs types d'achats (loyer, matériel, nourriture); et, de préférence, pour chaque type d'achat :
      ∘ un panel de montants ; et/ou,
      ∘ un rythme ; et/ou,
      ∘ un panel de fournisseurs ;
puis, lors d'un achat par le bénéficiaire chez un fournisseur, des étapes pour :
   - constituer un message d'achat comprenant :
      ∘ un panier d'items achetés ; et,
      ∘ un montant pour chaque item ;
         - confronter chaque item aux autorisations d'achat ;
         - pour les items autorisés : autoriser l'achat ;
         - débiter l'enveloppe du montant correspondant ;
         - payer le fournisseur ; et,
         - enregistrer l'opération à l'aide des moyens d'enregistrement.

Les moyens d'identification sont avantageusement biométriques.

L'invention porte aussi sur un système pour mettre en oeuvre un procédé de gestion d'autorisations d'achat par un bénéficiaire selon l'invention, qui comprend :
- de moyens de base de données comprenant des autorisations d'achat ;
- de moyens d'authentification du bénéficiaire, de préférence biométrique ;
- de moyens de paiement par le bénéficiaire ;
- de moyens pour enregistrer une opération de façon unique et irrévocable, de préférence comprenant des moyens de scellement cryptographique (Blockchain) ; et,
- des moyens pour vérifier confronter chaque item d'un achat auxdites autorisations.

Plusieurs modes d'exécution de l'invention seront décrits ci-après, à titre d'exemples non limitatifs, en référence aux dessins annexés dans lesquels :
- la figure 1 illustre un exemple de procédé selon l'invention, appliqué au cas des étudiants ;

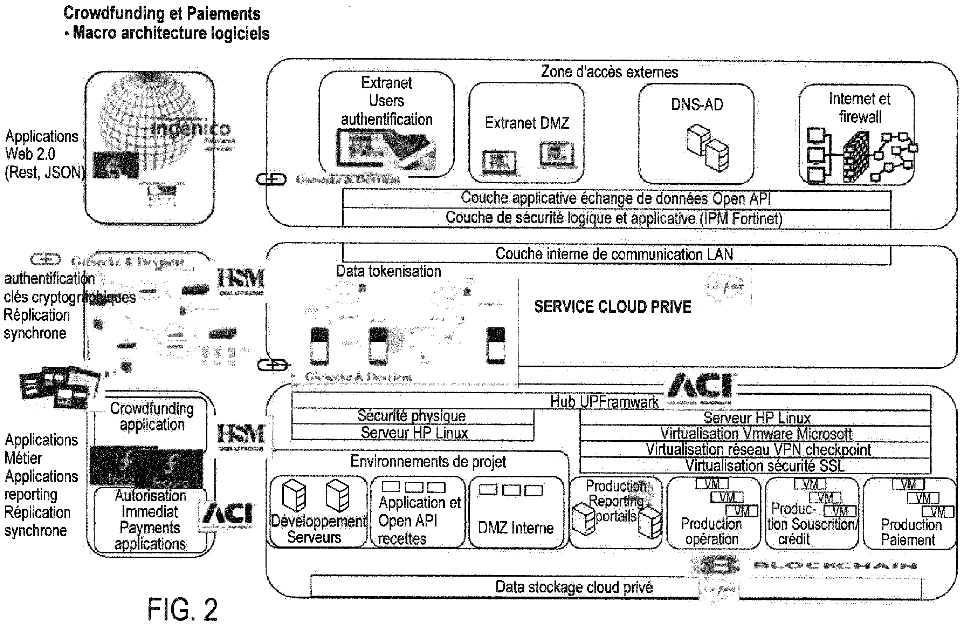

- la figure 2 illustre une macro-architecture de logiciels utilisés dans l'exemple de la figure 1 ;
- la figure 3 est un tableau qui illustre une cinématique fonctionnelle de flux dans le procédé de la figure 1 ;
- la figure 4 est un deuxième tableau qui illustre les flux dans le procédé de la figure 1;
- la figure 5 illustre un procédé d'identification forte, utilisable dans le procédé de la figure 1 ; et,
- la figure 6 illustre l'architecture d'une plateforme applicative pour le procédé de la figure 1.

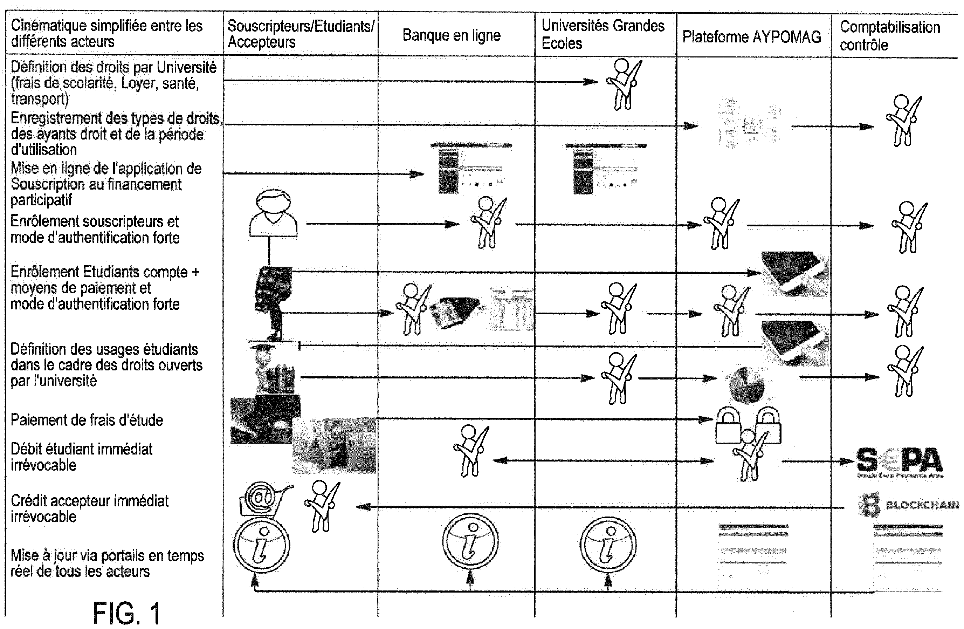

La figure 1 illustre un procédé de gestion de droits selon l'invention appliqué aux dépenses d'un étudiant. Dans ce procédé, interviennent :
- un service de banque en ligne ;
- un pôle universitaire ou une grande école, par exemple ;
- un ou des investisseurs ;
- un ou des étudiants ;
- des accepteurs de paiement ;
- un gestionnaire de plateforme, par exemple une société propriétaire de la plateforme ;
- un ou des tiers certificateurs financiers.

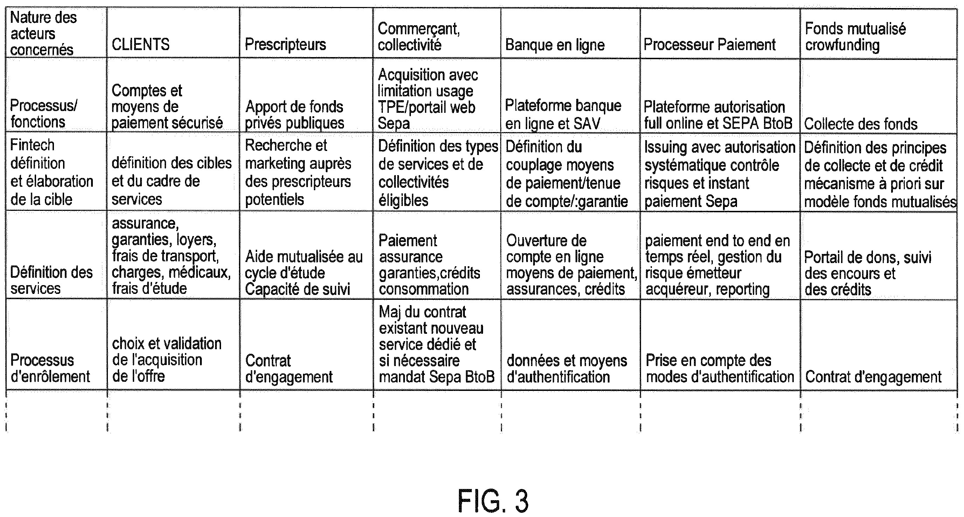

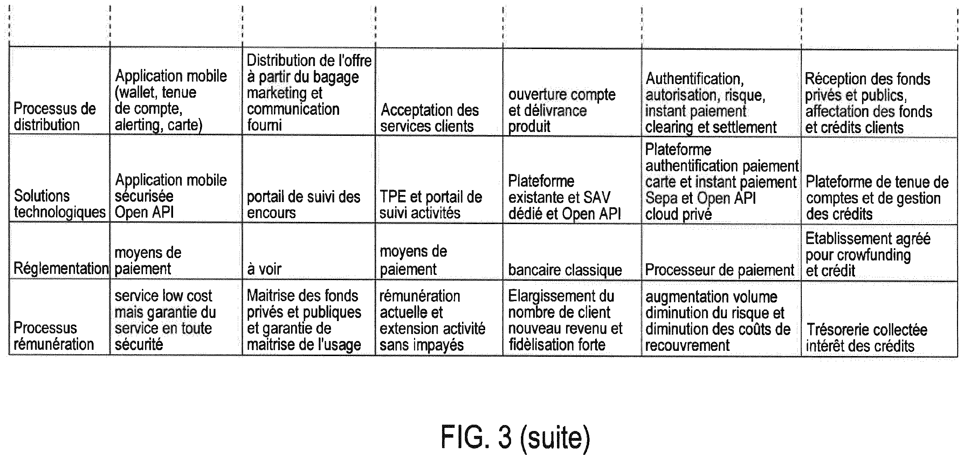

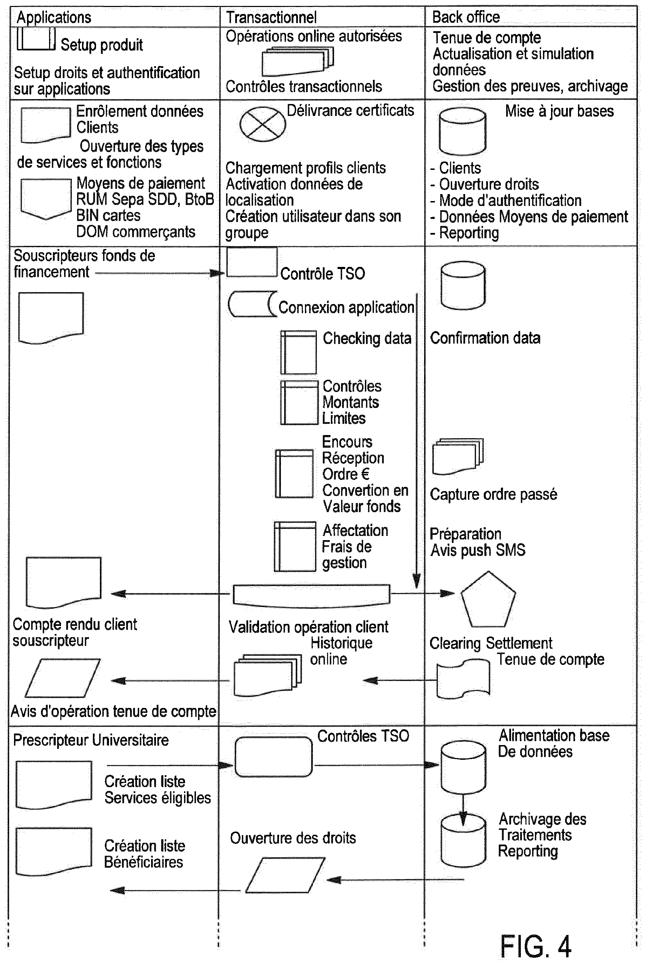

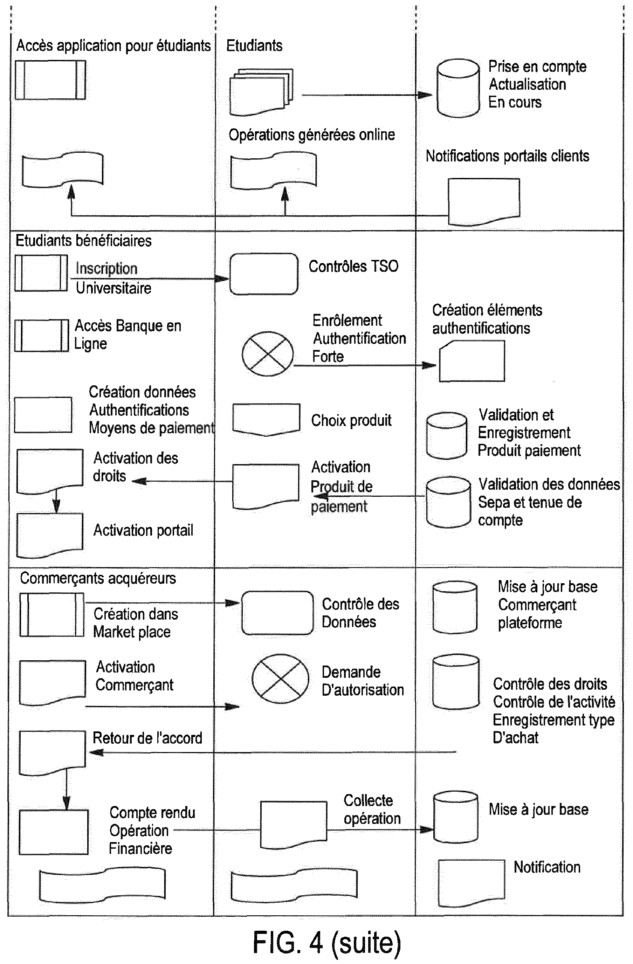

Le tableau de la figure 3 illustre et détaille des interventions de chacun des intervenants ci-dessus, dans des étapes du procédé. Le tableau de la figure 4 illustre et détaille différents flux mis en oeuvre dans le procédé, notamment celles faisant intervenir tout ou partie des intervenants.

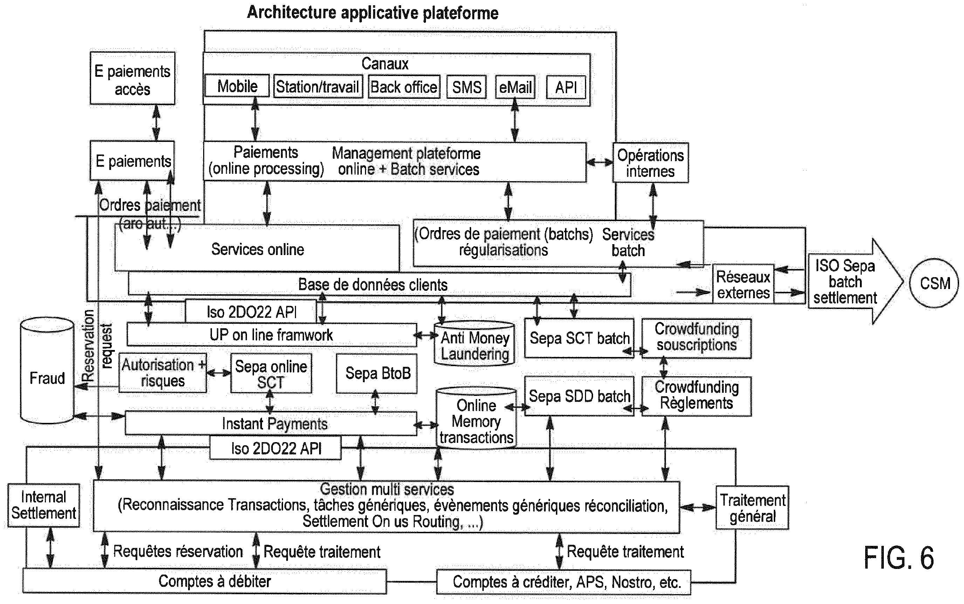

La figure 6 illustre une architecture applicative pour la plateforme.

Le service de Banque en ligne peut être un service existant, classique, mettant à disposition des étudiants, une tenue de comptes en ligne et un moyen de paiement dédié, physique ou virtuel sur mobile. Les règlements sont de préférence effectués au format carte ou SEPA ; dans le procédé selon l'invention, c'est-à-dire selon la conception de la solution utilisés, en instant paiement sans intermédiaire, conforme à la "directive des services de paiement numéro 2, de l'union Européenne (connue sous l'acronyme DSP2). Ainsi, le règlement s'effectue à très faible coût. Chaque règlement est avantageusement certifié par un algorithme de type Blockchain. Cette approche permet de réduire de 80 à 90 % le coût du service par rapport à la pratique de l'art antérieur.

Les Pôles Universitaires et Grandes Ecoles définissent des services utilisables par les étudiants avec les fonds alloués, y compris dans leurs cursus étrangers ou dans leurs travaux de recherche. Ils affectent aux fonds participatifs, les bourses et subventions versées par les différents acteurs publics. Ils peuvent faire figurer sur leurs sites Internet, une application permettant aux étudiants et leur famille d'adhérer aux services de souscription au fonds participatif et à la solution de financement du cursus études.

Les Pôles Universitaires et Grandes Ecoles assurent aussi, de préférence, une présentation de la solution et de ses mécanismes et ils peuvent avoir, à tout moment la capacité de radier un étudiant qui ne respecte pas les règles fixées dans le contrat. Ils disposent d'un portail leur permettant de piloter globalement et individuellement les dépenses réalisées.

Les investisseurs peuvent être constitués de différentes populations telles que notamment des Universités et Grandes Ecoles, des familles des étudiants, des anciens élèves de l'école, des PME ou des Grandes entreprises, des Collectivités ou encore des Banques. Leurs fonds sont collectés via une plateforme de financement participatif, par exemple spécialisée dans le crowdfunding, et agréée pour ces activités. Ils disposent d'un portail d'accès permanent aux opérations les concernant directement et reçoivent via leur portail mensuellement un bulletin d'information. Ils percevront annuellement une rémunération des fonds déposés sur la base des termes définis au contrat.

Chaque étudiant a un compte auprès du service de Banque en ligne ; il choisit un moyen de paiement qui lui convient, auprès d'une des banques agréées sur la plateforme. Lors de son inscription, chaque étudiant valide, dans un contrat souscrit auprès de son Université ou de sa Grande Ecole, différents types de dépenses qui sont susceptibles d'être prises en compte. Si l'étudiant est boursier, un accord de versement de leurs fonds boursiers dans le fonds participatif peut être signé, afin de bénéficier d'un effet de levier dans le procédé. De façon avantageuse, du fait de son adhésion au contrat, chaque étudiant bénéficie d'un fond collectif de garantie constitué, qui leur permet d'éviter certaines cautions ou garanties financières notamment demandées par les bailleurs immobiliers.

De préférence, les étudiants peuvent contractuellement bénéficier de mêmes montants de financement de leurs études, indépendamment de leur niveau social ou celui de leur parents.

Les accepteurs de paiement, par exemple les commerçants ou les bailleurs, peuvent utiliser leurs outils de paiement existants, sans faire d'investissement. Le procédé selon l'invention leur permet d'être garantis en toute circonstance sur les paiements effectués par les étudiants et ils peuvent être crédités instantanément. Il n'y a pas de frais de marque et ils bénéficieront à terme de frais de procédure réduits par rapport aux autres opérations avec les moyens de paiement classiques, qui empruntent des circuits de compensation de règlement. Les accepteurs de paiement sont de préférence rendus accessibles de manière prioritaire pour ce type d'achat via leur appartenance à une market-place (place de marché) de services aux étudiants. Les accepteurs de paiement peuvent en outre offrir des remises, des services ou des avantages associés.

La société propriétaire de la plateforme met à disposition une solution et des infrastructures permettant d'accueillir les clients dans des conditions de fonctionnement en ligne et entièrement sécurisées, pour les données et les opérations financières. Tous les accès se font avec authentification forte de tous les acteurs. Dans sa conception, la plateforme comprend trois parties distinctes :
- Les services clients, souscriptions au fonds de financement participatif
- Les services de paiement
- Les services de règlement et de certification, reporting des opérations.

Les données de la plateforme et tous les échanges sont de préférence chiffrés, les règlements utilisent les mécanismes de blockchain (cryptographie et gestion de la preuve).

La plateforme est interconnectée avec les Banques en ligne et accessible de tous les utilisateurs via des Open API sécurisées. Avantageusement, les moteurs de paiement répondent aux standards de réglementation européenne DSP1 et DSP2.

Les modes de rémunération sont définis à l'ouverture des services avec chacune des parties dans les clauses contractuelles.

Les tiers certificateurs financiers sont des sociétés d'expertise comptable et de commissariat aux comptes qui assurent, via la blockchain, une conformité et une intégrité de toutes les opérations réalisées entre professionnels (B to B), ainsi qu'un ajustement périodique entre les situations d'investissement participatif en crowd funding et leurs usages en paiement des cursus étudiants.

On va maintenant décrire le procédé illustré. Il comprend, pour chaque opération, notamment les étapes suivantes :
- acceptation de la demande ;
- authentification du client, c'est-à-dire de l'étudiant, dans le cas d'espèce ;
- routage de la transaction ;
- contrôles d'achat et d'encours ;
- accord d'autorisation ou refus ;
- enregistrement de l'opération ; et,
- recouvrement et conformité ;

### L'acceptation de la demande :

Lors d'une opération de paiement d'une dépense d'étude, un flux est généré sur le point de vente en ligne identique à un flux acceptation carte classique. Il n'y a pas de modification dans les équipements du commerçant chez qui l'achat est fait, pas de modification sur les réseaux d'acceptation carte (physique ou virtuelle). Les informations du type de support carte suffisent à renvoyer systématiquement une requête à la plateforme. Selon le procédé, aucun achat, de quelque montant qu'il soit, ne peut être réalisé hors ligne (offline) du fait d'une méthode d'autorisation personnalisée inscrite dans la puce de la carte.

### L'authentification :

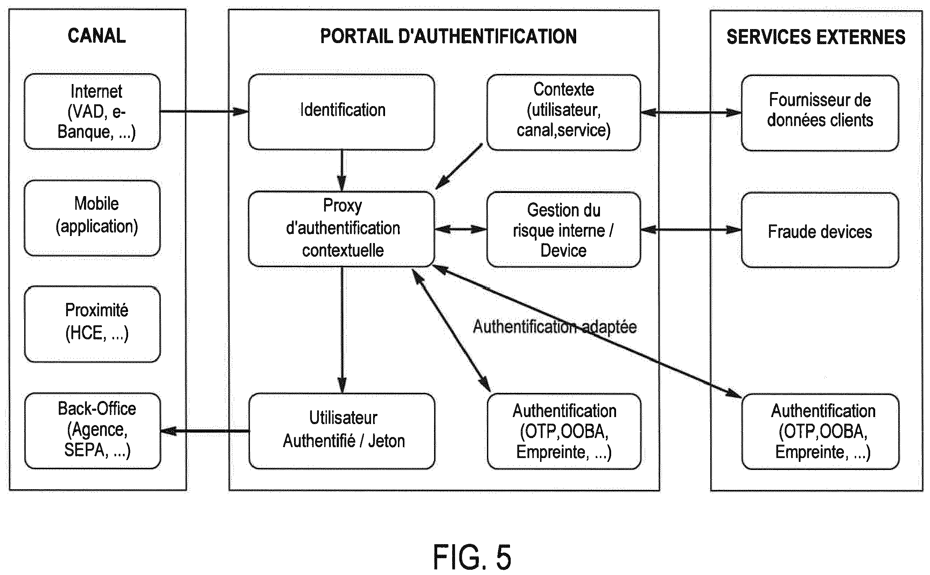

Des contrôles d'authentification forte, illustrés à la figure 5, sont effectués conformément à la DSP2, lors de la génération de la transaction. Une fois l'ensemble des règles DSP2 mises en place (janvier 2018), le choix d'un accès direct au réseau de la plateforme (cloud privé sécurisé) peut être fait par le client sur le point de vente, évitant ainsi des coûts et délais de routage inutiles. Le transport d'alias issus de la cryptographie évite le routage et la gestion de données clients lors du transport, au-delà de l'authentification; ceci est en outre conforme aux règles CNIL (Commission Nationale Informatique et Liberté, en France).

L'authentification peut par exemple utiliser des techniques de mot de passe à usage unique (OTP) ou une authentification hors bande (OOBA) ou une authentification biométrique. L'authentification biométrique peut utiliser une connaissance papillaire, pupillaire ou faciale.

Le procédé selon l'invention utilise préférentiellement une identification biométrique, ce qui rend l'usurpation de l'usage des droits très difficile, tout comme celle, des moyens de paiement. L'indentification intègre également une couche de communication permanente en ligne, via des portails et des notifications en temps réel, par profils utilisateurs.

### Le routage de la transaction :

Le flux adressé remonte à l'émetteur donc à la plateforme, par l'identification du BIN carte tokenisée et les règles créées dans des tables de routage habituelles, tout comme l'identification du commerçant et son activité commerciale, demandeur de la transaction via le réseau d'acceptation.

### Les contrôles d'achat et d'encours :

Lors de la transmission de du paiement électronique (e-paiement) à la plateforme, un portail de e-paiement remonte les données relatives au panier d'achat. Une fois sur la plateforme, après des contrôles d'acceptation du flux, une interrogation temps réel permet de valider :
- le client et son mode de paiement ;
- l'état de ses droits ;
- le type de dépense ; et,
- les données de localisation de la transaction si le client utilise un wallet (portefeuille électronique) ou un support carte virtuelle et si l'achat se fait bien sur un point de vente Internet et transite par le service de paiement en ligne défini pour la plateforme.

Le type de dépense peut être identifié à l'aide du code activité commerçant et/ou de la marque du commerçant, une liste de dépenses autorisées prédéfinies et panier transmis.

L'interrogation étant faite, sur la base des réponses à cette interrogation, un accord d'autorisation ou un refus est ensuite notifié au commerçant et le paiement validé ou non.

Contrairement au cas d'un commerçant qui ne serait pas abonné à la plateforme, lorsqu'un commerçant est abonné à la plateforme, le circuit habituel précédemment décrit est modifié ; le commerçant reçoit l'équivalent d'une pré-autorisation qui lui permet de finaliser la vente et la plateforme exécute un débit direct du compte du client, c'est-à-dire de l'étudiant, et un crédit direct du commerçant dans un paiement instantané. Le commerçant peut en outre opérer des services annexes au paiement, tel qu'une remise, un paiement en plusieurs fois, ou, une opération fidélité.

### L'enregistrement de l'opération :

La plateforme notifie via des applications, en temps réel l'opération dans les comptes :
- Etudiant : opération réalisée, nouveau solde des droits ;
- Commerçant : opération réalisée s'il est référencé sur la plateforme, avis classique s'il ne l'est pas ;
- Université : opération étudiant et situation de ses droits, type de dépense effectué et nature de l'achat, actualisation de l'allocation des droits globaux.

Les notifications à tous les acteurs sont avantageusement faites via un portail et des applications téléchargeables à partir de "stores" sur les différents types de dispositifs utilisés par les clients, par exemple des téléphones ou des tablettes informatiques. Elles sont avantageusement compatibles avec différents systèmes d'exploitation, tels IOS, Android ou Microsoft.

Avantageusement, la plateforme génère des scellements cryptographiques, du type Blockchain qui finalisent l'opération financière et certifient son unicité et son irrévocabilité. L'usage de la technologie de Blockchain complète le volet de certification utilisable comme élément de preuve, lors d'audits ou lors d'un audit d'un commissariat aux comptes. La transparence de l'affectation des fonds et de leur destination finale, au service réel des cursus d'études, en est renforcée. Ce mécanisme permet de générer et certifier un grand livre des opérations financières. La plateforme dépose au fil de l'eau les éléments de la blockchain, de préférence détenue par son commissariat aux comptes.

Par la géolocalisation, lorsque les paiements sont effectués à partir d'un wallet, la plateforme adresse les offres de services annexes ou les réductions accordées par le commerçant en ligne aux étudiants.

### Le recouvrement et la conformité :

Par ailleurs, par la fonction "instant paiement" (c'est-à-dire de paiement instantané) de la plateforme, pour les paiements intra plateforme, il n'est pas nécessaire de passer par les circuits de compensation et de faire circuler des données personnelles pour chaque opération.

Les risques sont limités par rapport aux procédés de paiement de l'art antérieur. Il n'y a pas de fraude possible, de par les mécanismes et les différentes étapes décrites. La radiation d'étudiants qui tenteraient de réaliser des achats non définis est possible à tout moment, tout comme le blocage des droits. Le contrôle en temps réel des achats effectués évite les dérives actuelles avec les fonds boursiers ou les subventions de toute nature. Les souscripteurs (particuliers, universités, collectivités, Etat, Entreprises, ...) disposent d'une garantie totale et permanente de l'affectation directe des fonds aux besoins d'étude exclusivement. Ils ne supportent plus les risques actuels liés au crédit ou le risque de mauvaise allocation des fonds.

Le procédé selon l'invention assure donc l'ensemble des acteurs de la chaine de valeur du résultat et les préservent de toute fraude ou contournement du bon usage. Il fait appel à des développements d'API (applications) et de mécanismes de rapprochement de données en temps réel, n'existant pas à ce jour dans les paiements et permettant dans un seul et même flux de traiter la demande d'achat, l'autorisation du type d'achat et le contrôle des droits et encours, les opérations financières et les notifications aux différents acteurs.

Le procédé garanti ainsi un coût d'opération faible et limite les commissions prélevées aux commerces et aux clients. Il permet aussi de créer un réseau social d'inter-acteurs rassemblés autour des services apportés et de développer ensuite d'autres services commerciaux associés.

Le procédé utilise des techniques existantes de financement participatif destinées à rendre possible un financement égalitaire d'étudiants, y compris ceux qui ne disposent pas de l'argent nécessaire, pour faire des cycles supérieurs.

Le procédé utilise des services bancaires par canaux digitalisés et des moyens de paiements digitaux ou physiques. Ainsi, l'invention révise complètement le mode de contrôle des moyens de paiement alloués qui ne deviennent utilisables qu'avec un contrôle en temps réel des objets de dépenses, en liaison directe avec des accords prédéfinis, par exemple par les universités et les grandes écoles. Ces objets de dépenses prédéfinis peuvent être : "je peux acheter mes livres et payer ma scolarité ou mes transports", mais je ne peux pas "payer des achats non définis tels que des spectacles ou des vêtements".

L'innovation permet de contrôler le panier du client et de dénouer sur les comptes les opérations en temps réel, en les rendant irrévocables pour les parties.

Bien sûr, l'invention n'est pas limitée aux modes de réalisation préférés qui viennent d'être décrits mais, au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

L'invention peut aussi s'appliquer au contrôle de l'usage d'autres subventions pour d'autres populations que des étudiants, telles que des primes de scolarité, ou de certaines allocations, telles que des allocations chômage ou des allocations familiales.

La présente invention s'appuie sur un concept nouveau qui permet de traiter en temps réel et contrôler un ensemble de dépenses. Notamment dans le cas d'un étudiant, cette innovation permet de traiter en temps réel et contrôler un ensemble de dépenses universitaires définies par les universités et pour lesquels les fonds sont mis à la disposition des étudiants durant leur cursus et remboursables seulement à l'issue, après l'entrée dans la vie active. L'invention n'est pas non plus limitée au domaine universitaire.

Les technologies utilisées par l'invention sont rassemblées sur une plateforme alliant progiciels et fonctionnalités de financement participatif, de paiement digitalisé, d'application clients "multi-devices" (multi-dispositifs, en français) et d'authentification biométrique.

L'invention est une innovation technologique n'existant pas à ce jour, qui permet de traiter dans un seul et même flux, en temps réel, la demande de paiement, l'enregistrement et le contrôle des droits et le crédit et le débit en compte irrévocable. Elle est complétée par un mécanisme de certification de tous les acteurs qui répond aux exigences des Banques Centrales Européennes.

## Revendications

1. Procédé pour gérer des autorisations d'achat par un bénéficiaire, **caractérisé en ce qu'**il comprend :
la fourniture :
- de moyens de base de données ;
- de moyens d'authentification du bénéficiaire ;
- de moyens de paiement par le bénéficiaire, numériques et de préférence en une monnaie électronique ;
- de moyens pour enregistrer une opération de façon unique et irrévocable, de préférence comprenant des moyens de scellement cryptographique (Blockchain) ;
des étapes préalables pour :
- constituer au moins une enveloppe de fonds ; et, pour chaque enveloppe,
- archiver dans les moyens de base de données des autorisations d'achat comprenant un ou plusieurs types d'achats (loyer, matériel, nourriture) ; et, de préférence, pour chaque type d'achat :
∘ un panel de montants ; et/ou,
∘ un rythme ; et/ou,
∘ un panel de fournisseurs ;
puis, lors d'un achat par le bénéficiaire chez un fournisseur, des étapes pour :
- constituer un message d'achat comprenant :
∘ un panier d'items achetés ; et,
∘ un montant pour chaque item ;
- confronter chaque item aux autorisations d'achat ;
- pour les items autorisés : autoriser l'achat ;
- débiter l'enveloppe du montant correspondant ;
- payer le fournisseur ; et,
- enregistrer l'opération à l'aide des moyens d'enregistrement.

2. Procédé selon la revendication 1, **caractérisé en ce que** les moyens d'identification sont biométriques.

3. Système pour mettre en oeuvre un procédé de gestion d'autorisations d'achat par un bénéficiaire selon la revendication 1, **caractérisé en ce qu'**il comprend :
- de moyens de base de données comprenant des autorisations d'achat ;
- de moyens d'authentification du bénéficiaire, de préférence biométrique ;
- de moyens de paiement par le bénéficiaire ;
- de moyens pour enregistrer une opération de façon unique et irrévocable, de préférence comprenant des moyens de scellement cryptographique (Blockchain) ; et,
- des moyens pour vérifier confronter chaque item d'un achat auxdites autorisations.
